# EUROPÄISCHE PATENTSCHRIFT

(11) **EP 1 000 986 B1**
(45) Veröffentlichungstag und Bekanntmachung des Hinweises auf die Patenterteilung: **08.10.2003**
(21) Anmeldenummer: 99122425.4
(22) Anmeldetag: 10.11.1999
(51) Int. Cl.: C09D 11/00, C09D 11/16, C09D 5/00, C09D 5/22, C09K 11/06, C09K 11/56, C09K 11/02

(54) **Leuchtfarbenadditive**
Luminescents dyestuffs additive
Additif pour colorants luminescents

(30) Priorität: 16.11.1998 DE 19852779
(43) Veröffentlichungstag der Anmeldung: 17.05.2000
(73) Patentinhaber: Emby Anstalt, 9494 Schaan (LI)
(72) Erfinder: Blasi, Ulrich Martin, 6811 Göfis (AT)
(74) Vertreter: Preissner, Nicolaus, Dipl.-Ing.

(56) Entgegenhaltungen:
- EP-A- 0 125 028
- PATENT ABSTRACTS OF JAPAN vol. 1998, no. 02, 30. Januar 1998 (1998-01-30) & JP 09 272866 A (TOSHIBA CORP), 21. Oktober 1997 (1997-10-21)
- PATENT ABSTRACTS OF JAPAN vol. 1995, no. 11, 26. Dezember 1995 (1995-12-26) & JP 07 216351 A (FUJI ELECTRIC CO LTD), 15. August 1995 (1995-08-15)

## Beschreibung

Die vorliegende Erfindung betrifft Leuchtstoffe, die einer Basisfarbe bzw. einem Anstrichstoff wie einer Tagesleuchtfarbe bzw. einer Tagesleuchtdruckfarbe zugesetzt werden können. Die mit den Leuchtmittelfarbenadditiven versehenen Anstrichstoffe bzw. Farbflüssigkeiten leuchten bei Tage im Sonnenlicht, bei Nacht unter Einwirkung von ultraviolettem Licht.

Die Erfindung betrifft daher auch Anstrichstoffe bzw. Farbflüssigkeiten, die dieses neue Leuchtfarbenadditiv enthalten.

Die erfindungsgemäßen Leuchtfarbenadditive kommen als Zusätze insbesondere bei Markertinte (T-Shirtmarker), bei Druckfarben für Piezoprint, Filzschreiber, Airbrush-Druckfarben, Aquarellfarben und Seidenmalfarben sowie für Straßenmarkierungen zum Einsatz.

Allgemein ist bekannt, daß eine erhöhte Leuchtkraft auf der Fähigkeit der Tagesleuchtfarben beruht, nicht nur die Eigenfarbe zu zeigen, sondern auch die im Tageslicht enthaltenen Anteile von ultravioletten in sichtbares Licht umzuwandeln und dadurch die Lichtwirkung zu verstärken.

Chemisch handelt es sich bei den Tagesleuchtfarben bzw. Tagesleuchtdruckfarben um Leuchtpigmente und feinpulverisierte organische Laser, wie Polyvinylchlorid, Aminoplaste und dergleichen, die mit fluoreszierenden Farbstoffen wie Rhodamin, Fluoreszein und dergleichen gefärbt sind.

Die in der Technik angewendeten Leuchtstoffe sind praktisch alle phosphoreszierend mit mehr oder weniger langen Nachleuchtzeiten. Allgemein fällt der Begriff der Phosphoreszenz unter den Oberbegriff der Lumineszenz. Die Lumineszenzprozesse lassen sich nach der Art der Energiezufuhr einteilen.

Unter Lumineszenz versteht man allgemein die Emission von Licht im sichtbaren, UV- und IR-Spektralbereich nach Energiezufuhr.

Die Lumineszenz ist stets auf einen Übergang von einem Elektron aus einem energetisch höheren Zustand in einen unbesetzten, energetisch tieferen Zustand zurückzuführen. Dauernd besetzte Elektronen-Zustände oft als positiv geladene _{"}Löcher" behandelt werden, läßt sich die Lumineszenz auch als Rekombination eines Elektronen-Loch-Paares beschreiben, bei dem die freiwerdende Energie zumindest teilweise in Form von Lichtquanten (Photonen) abgegeben werden.

Allgemein bezeichnet man Leuchtstoffe als für zur Lumineszenz befähigte Stoffe, die nach Anregung fluoreszieren bzw. phosphoreszieren.

Die Herstellung von Leuchtstoffen erfolgt im technischen Maßstab in gas- oder schon beheizten Brennöfen bei Temperaturen zwischen etwa 700 °C und 1.600 °C je nach Art der Grundstoffe und den zu erreichenden Eigenschaften. In fast allen Fällen muß zum Entstehen der Lumineszenz eine geeignete Schwermetallverbindung (Aktivator) hinzugegeben werden. Es gibt Leuchtstoffe, die bereits durch Zugabe einer Schwermetallverbindung zu einem einheitlichen Grundstoff hergestellt werden können. In vielen Fällen wird jedoch erst bei dem Glühprozeß aus verschiedenen einfachen Verbindungen eine komplexe Verbindung erhalten. Zu den bekannten Leuchtstoffen gehört das beispielsweise in Elektronenschaltröhren angewendete blau- bzw. grünleuchtende Zinksulfid (ZnS), das in hochreiner Form mit einer Silberlösung dotiert und dann bei 750 °C bis 910 °C geglüht wird. Zu den aus verschiedenen Komponenten hergestellten Leuchtstoffen gehört auch das Zinksilikat.

Nach dem Glühprozeß werden sie nach Anwendung noch Nachbehandlungen vorgenommen, beispielsweise das Fraktionieren oder Auswaschen, um die Schmelzmittel u. a. bei dem Glühprozeß entstandener störender Verbindungen zu entfernen.

Die Anwendung von Leuchtstoffen ist sehr vielseitig. Die Leuchtstoffe können beispielsweise durch Elektronenstrahlen, UV-Strahlen, durch elektrische Felder sowie durch sichtbares Licht angeregt werden.

Bei der Anregung durch sichtbares Licht sind Leuchtstoffe von Bedeutung, die durch Anregung mit kurzwelligem sichtbaren Licht nach Abschalten der anregenden Lichtquelle längere Zeit nachleuchten, also starke Phosphoreszenz zeigen. Hauptsächlich wird hier ZnS:Cu verwendet, aus dem mit geeigneten Lacken die sogenannten "Nachleuchtfarben" hergestellt werden.

Mit Leuchtstoffen werden auch Folien u. ä. hergestellt, um den gleichen Effekt zu erzielen. Die Nachleuchtfarben haben in letzter Zeit sehr an Bedeutung zugenommen, weil damit beispielsweise Fluchtwege markiert werden können, die bei Lichtausfall noch erkannt werden können.

Aufgabe der vorliegenden Erfindung ist es daher, einen neuen Leuchtstoff bereitzustellen, der höhere Lichtintensitäten und bessere Farbwiedergabeeigenschaften erreicht. Der Leuchtstoff soll in Anstrichstoffen, insbesondere Tagesleuchtfarben bzw. Tagesleuchtdruckfarben eingesetzt werden können.

Diese Aufgabe wird durch die neuen Leuchtstoffe gemäß Anspruch 1, die Verwendung gemäß Anspruch 3 sowie durch die Anstrichstoffe gemäß Anspruch 4 gelöst.

In den Unteransprüchen sind vorteilhafte Ausführungsformen der Erfindung enthalten.

Überraschenderweise wurde erfindungsgemäß festgestellt, daß durch den neuen Leuchtstoff mit den Komponenten Zinksulfid als Grundstoff und Bromhexin als Aktivator bzw. hexagonalem Wurzit als weiterem Grundstoff ein Leuchtfarbenadditiv bereitgestellt werden kann, das noch höhere Lichtintensitäten und bessere Farbwiedergabeeigenschaften als die bisherigen Additive, hier insbesondere ZnS:Cu hat. Vorzugsweise enthält die erfindungsgemäße Leuchtstoffzusammensetzung 52,8 bis 64,8 Gew.-%, insbesondere 58,8 Gew.-% Zinksulfid, 15,9 bis 19,3 Gew.-%, insbesondere 17,6 Gew.-% hexagonales Wurzit und 21,2 bis 25,8 Gew.-%, insbesondere 23,5 Gew.-% Bromhexin.

Bei Wurzit handelt es sich um die bekannte Hochtemperaturmodifikation der Zinkblende bzw. des Zinksulfids, die aus diesem bei 1.020 °C entsteht.

Bei dem erfindungsgemäß eingesetzten Aktivator Bromhexin handelt sich um N-Cyclohexyl-N-methyl-(2-amino-3,5-dibrombenzyl)-amin (CaS-Nr.3572-43-8).

Der erfindungsgemäße Leuchtstoff wird als Zusatz für Druckfarbe bei Piezoprint, Markertinte (T-Shirtmarker), Filzschreiber, Airbrushdruckverfahren sowie für Straßenmarkierungen verwendet. Besonders bevorzugt ist auch der Einsatz für Airbrush- und Aquarell- bzw. Seidenmalfarben.

Die Erfindung betrifft daher auch Anstrichstoffe bzw. Farbflüssigkeiten, die Leuchtstoffe mit ZnS als Grundsubstanz sowie Bromhexin und hexagonalem Wurzit enthalten.

Die Erfindung wird im folgenden anhand eines Beispiels näher erläutert, ohne die Erfindung jedoch darauf zu beschränken.

### Beispiel

### Herstellung einer Permanentmarker-Nachfülltusche

### 1. Herstellung des Leuchtstoffs

Die Herstellung des Leuchtstoffs erfolgte in einem schon beheizten Brennofen bei Temperaturen zwischen etwa 180 °C und 200 °C. Für 150 ml Farbstofflösung wurden 30 mg Zinksulfid, 12 mg Bromhexin und 9 mg hexagonales Wurzit innig gemischt und in einen Quarzgutziegel gefüllt und in den Ofen gegeben, wo es für etwa 15 Minuten auf einer Temperatur von 180 °C bis zu 100 °C gehalten wurde.

Nach 15 Minuten wurde der hergestellte Leuchtstoff komplett aus dem Ofen herausgenommen und abkühlen gelassen. Der nach der Hitzebehandlung erzeugte Leuchtstoffkomplex erzeugte eine weiße Lumineszenz.

### 2. Herstellung einer Leuchtstoff-Bindemittelpaste

51 mg der in Schritt 1. hergestellten Leuchtstoffzusammensetzung wurden mit 60 mg Plextol® (Handelsprodukt der Firma Röhm) gemischt und eine streichfähige Paste hergestellt.

### 3. Herstellung des Farbstoffs bzw. Pigments

150 ml einer Helihochrot-Farbstofflösung wurden mit 3 bis 5 ml Essigsäure (80 %ig), 3 ml Ahornsiruplösung und 5 mg Natriumhydrogencarbonat versetzt, gemischt und für wenige Minuten auf 100 °C erhitzt.

Danach wurde die LeuchtstoffLeuchtstoff-Bindemittelpaste (Herstellung siehe unter Punkt 2.) eingerührt und die Lösung für eine halbe Stunde abkühlen gelassen. Nach Abkühlen auf 20 °C konnte die fertige Farbstofflösung in Sicherheitslaborflaschen abgefüllt werden.

Die erhaltene Farbstofflösung kann für Piezodrucker sofort eingesetzt werden. Sollte jedoch die Farbstofflösung als Markernachfülltinte angewendet werden, so ist noch der Zusatz von 10 bis 30 Gew.-% eines Feuchthaltemittel, wie beispielsweise Glykol notwendig.

Die erhaltene erfindungsgemäße Farbstofflösung zeigte im Vergleich zu den Standardfarblösungen höhere Lichtintensitäten und eine bessere Farbwiedergabe. Die erfindungsgemäße Helihochrotlösung war im übrigen auffällig heller und erfüllte die DIN-Anforderungen ohne Farbänderungen.

## Patentansprüche

1. Leuchtstoff enthaltend ZnS als Grundsubstanz sowie einen Aktivator, **dadurch gekennzeichnet, daß** er als Aktivator Bromhexin sowie als weitere Grundsubstanz hexagonales Wurzit enthält.

2. Leuchtstoff gemäß Anspruch 1, **dadurch gekennzeichnet, daß** er
(a) 52,8 bis 64,8 Gew.-%, insbesondere 58,8 Gew.-% ZnS,
(b) 15,9 bis 19,3 Gew.-%, insbesondere 17,6 Gew.-% hexagonales Wurzit,
(c) 21,2 bis 25,8 Gew.-%, insbesondere 23,5 Gew.-% Bromhexin,
wobei sich die Komponenten (a), (b) und (c) auf 100 Gew.-% ergänzen,
enthält.

3. Verwendung des Leuchtstoffs gemäß einem der Ansprüche 1 oder 2 für Tagesleuchtfarben bzw. Tagesleuchtdruckfarben.

4. Anstrichstoff, insbesondere Tagesleuchtfarbe bzw. Tagesleuchtdruckfarbe, aus einer wäßrigen bzw. alkoholischen Lösung bzw. Suspension von Farbstoffen, Bindemitteln, Konservierungsstoffen sowie den üblichen Hilfs- und Zusatzstoffen, **dadurch gekennzeichnet, daß** die Farbflüssigkeit eine wäßrige Dispersion thermoplastischer und selbstvernetzender Acrylpolymerer als Bindemittel, insbesondere Plextol®, sowie weiterhin einen Leuchtstoff gemäß einem der Ansprüche 1 oder 2 enthält.

## Claims

1. A luminescent composition comprising ZnS as the base substance as well as an activator, **characterized in that** it comprises bromhexine as the activator as well as hexagonal wurtzite as a further base substance.

2. The luminescent composition as set forth in claim 1, **characterized in that** it comprises
(a) 52.8 to 64.8 % by weight, more particularly 58.8 % by weight ZnS,
(b) 15.9 to 19.3 % by weight, more particularly 17.6 % by weight hexagonal wurtzite,
(c) 21.2 to 25.8 % by weight, more particularly 23.5 % by weight bromhexine,
the components (a), (b) and (c)
supplementing to 100 % by weight.

3. Use of the luminescent composition as set forth in any of the claims 1 or 2 for daylight fluorescent paints or daylight fluorescent printing inks.

4. A coating composition, more particularly daylight fluorescent paint or daylight fluorescent printing ink of an aqueous or alcoholic solution or suspension of colorants, carriers, stabilizers as well as the usual auxiliaries and additives, **characterized in that** the colorant liquid comprises an aqueous dispersion of thermoplastic and self-crosslinking acrylic polymers as carriers, more particularly Plextol®, as well as furthermore a luminescent composition as set forth in any of the claims 1 or 2.

## Revendications

1. Matière luminescente, contenant du ZnS à titre de substance de base ainsi qu'un activateur, **caractérisée en ce qu'**elle contient du bromhexine à titre d'activateur ainsi que de la wurzite hexagonale à titre de substance de base supplémentaire.

2. Matière luminescente selon la revendication 1, **caractérisée en ce qu'**elle contient :
(a) 52,8 à 64,8 % en poids de ZnS, en particulier 58,8 % en poids,
(b) 15,9 à 19,3 % en poids de wurzite hexagonale, en particulier 17,6 % en poids,
(c) 21,2 à 25,8 % en poids de bromhexine, en particulier 23,5 % en poids,
de telle sorte que les composantes (a), (b) et (c) se complètent à 100 % en poids.

3. Utilisation de la matière luminescente selon l'une ou l'autre des revendications 1 et 2 pour des peintures ou des encres luminescentes à la lumière diurne.

4. Matière de peinture, en particulier peinture ou encre luminescente à la lumière diurne, constituée d'une solution ou d'une suspension aqueuse ou alcoolique de colorants, de liants, de produits conservateurs, ainsi que des matières auxiliaires et additionnelles habituelles, **caractérisée en ce que** le colorant liquide contient une dispersion aqueuse de polymères acryliques thermoplastiques et auto-réticulants à titre de liant, en particulier du Plextol (marque déposée), ainsi qu'une matière luminescente selon l'une ou l'autre des revendications 1 et 2.
